# EUROPÄISCHE PATENTSCHRIFT

(11) **EP 0 857 534 B1**
(45) Veröffentlichungstag und Bekanntmachung des Hinweises auf die Patenterteilung: **12.12.2001**
(21) Anmeldenummer: 98101920.1
(22) Anmeldetag: 04.02.1998
(51) Int. Cl.: B23K 9/173

(54) **Metallschutzgasschweissen mit rotierendem Lichtbogen**
MAG welding with a rotating arc
Soudage avec gaz de protection et arc tournant

(30) Priorität: 06.02.1997 DE 19704513
(43) Veröffentlichungstag der Anmeldung: 12.08.1998
(73) Patentinhaber: Linde Gas Aktiengesellschaft, 82049 Höllriegelskreuth (DE)
(72) Erfinder: Trube, Stefan, Dr. Dr.-Ing., 81669 München (DE)
(74) Vertreter: Kasseckert, Rainer

(56) Entgegenhaltungen:
- DE-A- 19 711 955
- GB-A- 768 758

## Beschreibung

Die Erfindung betrifft ein Verfahren zum Metallschutzgasschweißen mit einem zwischen einer abschmelzenden Drahtelektrode und einem metallischen Werkstück ausgebildeten rotierendem Lichtbogen unter Zufuhr eines im wesentlichen aus Argon oder aus Argon und Helium bestehenden Schutzgases.

Das Metallschutzgasschweißen wurde in den letzten Jahren ständig weiter entwickelt. Dabei wurde insbesondere versucht, den Hochleistungsbereich, d.h. den Schweißbereich mit besonders hohen Abschmelzleistungen, in seinen Parametern detailliert zu erfassen, um den Schweißprozeß auch im Hochleistungsbereich zu beherrschen und damit einer praktischen Nutzung zugänglich zu machen.

Vor allem im Bereich des Hochleistungsschweißens werden hinsichtlich der Lichtbogenart verschiedene Schweißverfahren unterschieden. Neben dem konventionellen Sprühlichtbogen, dem Hochleistungs-Kurzlichtbogen und dem Hochleistungs-Sprühlichtbogen bei höheren Drahtvorschubgeschwindigkeiten tritt auch ein rotierender Sprühlichtbogen auf. Den konventionellen Sprühlichtbogen kennzeichnet ein axialer, kurzschlußfreier Werkstoffübergang. Vom Hochleistungs-Sprühlichtbogen mit einem axialen tropfenförmigen Werkstoffübergang gelangt man zum rotierenden Lichtbogen vor allem durch Erhöhung der Schweißspannung, aber auch durch Erhöhung der Drahtvorschubgeschwindigkeit. Die Rotation des Lichtbogens setzt voraus, daß das Drahtende durch die hohe Strombelastung erweicht und aufgrund der vorhandenen Lichtbogenkräfte ausgelenkt wird. Üblicherweise wird die Drahtelektrode durch ein Kontaktrohr geführt.

Im Hochleistungsbereich treten Schweißfehler insbesondere dadurch auf, daß der rotierende Lichtbogen in einen Sprühlichtbogen bzw. einen Hochleistungs-Sprühlichtbogen übergeht. Bereits ein kurzzeitiges Umspringen von einer Lichtbogenart zur anderen innerhalb eines Schweißprozesses kann aber bereits unzulässige Schweißnahtfehler hervorrufen. Dieses Verhalten wurde durch zahlreiche Versuche bestätigt.

Bislang gelang es nur unbefriedigend, die Rotation des Lichtbogens stabil zu halten. Es tritt immer wieder ein Umspringen des Lichtbogens in den nicht rotierenden Zustand des Sprühlichtbogens auf. Dieses Umspringen führt zu Schweißfehlern, aber auch bereits ein instabiles Rotieren an sich kann Schweißfehler hervorrufen. Diese Schweißfehler stehen vor allem einem industriellen Einsatz des rotierenden Lichtbogens im Wege, da dieser Einsatz in der Regel eine hohe Schweißgüte verlangt.

Es wurden zahlreiche Untersuchungen unternommen, die Bedingungen zu finden und zu definieren, die zu einem qualitativ hochwertigen, leistungsfähigen und reproduzierbaren Schweißprozeß entscheidend beitragen. Das Grundproblem beim Metallschutzgasschweißen vor allem im mit Blick auf den industriellen Einsatz besonders interessanten Hochleistungsbereich bestand darin, daß aber daraus nicht ohne weiteres abgelesen oder abgeleitet werden konnte, unter welchen Bedingungen die Rotation des Lichtbogens stabil gehalten werden kann, da die Ergebnisse undurchsichtig und zum Teil widersprüchlich waren oder zumindest erschienen.

Unter der Bezeichnung T.I.M.E.® ist ein MAG-Hochleistungsschweißverfahren bekannt, wobei ein Gasgemisch mit 65 % Argon, 26,5 % Helium, 8 % CO₂ und 0,5 % Sauerstoff verwendet wird (z.B. deutsches Patent DE 33 28 272). Diese Gasmischung wird üblicherweise als T.I.M.E.® -Gas bezeichnet. Beim Einsatz des T.I.M.E.® -Gases wie auch bei anderen Gasen treten jedoch immer wieder vor allem im Bereich von Drahtvorschüben oberhalb etwa 20 m/min bei einer Drahtelektrode mit einem Durchmesser von 1,2 mm oder oberhalb etwa 15 m/min bei einer Drahtelektrode mit einem Durchmesser von 1,0 mm Instabilitäten des Lichtbogens auf.

Im Verfahren nach dem deutschen Patent DE 44 29 228, das die Basis für den Oberbegriff des Anspruchs 1 bildet, wird beschrieben, daß durch Verringerung des Kontaktrohrabstandes und der Schweißspannung ein ungewollter Übergang des rotierenden Lichtbogens in den modifizierten Sprühlichtbogen unterdrückt wird. Als Schutzgas kommt dabei ein Gemisch aus 1 bis 5 % Sauerstoff, 14 bis 34 % CO₂ oder Helium und 65 bis 85 % Argon zum Einsatz. Die Drahtelektrode wird nicht weiter beschrieben.

Der Erfindung liegt daher die Aufgabe zugrunde, ein Verfahren der eingangs genannten Art aufzuzeigen, welches ein Schweißen von Metallen unter Schutzgas mit einem stabilen rotierenden Lichtbogen zur Verfügung stellt. Das Metallschutzgasschweißverfahren soll dabei für die maschinelle Brennerführung geeignet sein. Das erfindungsgemäße Schutzgasschweißverfahren sollte möglichst die Herstellung extrem porenarmer Schweißgüter mit einem tieferen Einbrand gerade auch bei einer hohen Abschmelzleistung und mit hoher Güte ermöglichen.

Diese Aufgabe wird erfindungsgemäß dadurch gelöst, daß eine Drahtelektrode aus einem ferromagnetischen Material eingesetzt wird und entweder ein Schutzgas mit 1 bis 8 Vol.-% O₂ und restlich Argon oder ein Schutzgas mit 1 bis 8 Vol.-% O₂, 10 bis 40 Vol.-% Helium und restlich Argon verwendet wird.

Der Erfindung liegt die wesentliche Erkenntnis zugrunde, daß die Drahtbeschaffenheit und die Zusammensetzung des Schutzgases entscheidend das Verhalten des Lichtbogens im Hinblick auf mögliche Instabilitäten des Lichtbogens beeinflussen. Die Stabilität des Lichtbogens beim Metallschutzgasschweißen mit einem rotierenden Lichtbogen kann gewährleistet werden, wenn ein ferromagnetischer Draht als Elektrode benutzt wird und sich das Schutzgas aus den genannten Komponenten mit den obengenannten Anteilen zusammensetzt. Mit der Bedingung des ferromagnetischen Materials ist im Zusammenhang mit der Erfindung diese Materialeigenschaft für den Draht als Ausgangsmaterial in ungeschmolzenem Zustand (und nicht etwa im Zustand des Plasmas) angesprochen. Das legt den Schluß nahe, daß magnetische Kräfte ein stabiles Rotieren des Lichtbogens unterstützen oder möglicherweise sogar ursächlich begründen. Bei der Zusammensetzung des Schutzgases ist von Bedeutung, daß kein CO₂ im Schutzgas zugemischt ist. Bei Einhaltung der Parameter des erfindungsgemäßen Verfahrens läßt sich ein Schweißen mit stabil rotierendem Lichtbogen im Bereich hoher Abschmelzleistungen mit hoher Qualität und Güte verifizieren. Die Kombination der Parameter sorgt und garantiert dabei für die geforderte Stabilität des Lichtbogens. Sie führt zu einer Reproduzierbarkeit des Metallschutzgasschweißen auch und gerade im Hochleistungsbereich. Die Schweißparameter können bei Einhalten der erfindungsgemäßen Vorgaben ohne Bedenken im Hinblick auf Instabilitäten bei der Lichtbogenrotation optimiert werden, beispielsweise mit der Zielrichtung eines besonders tiefen Einbrands. Die Lichtbogenrotation wird vom Kontaktrohrabstand nicht mehr beeinflußt. Die Erfindung ermöglicht fehlerfreie Schweißnähte auch bei hohen Abschmelzleistungen.

Das erfindungsgemäße Verfahren ist grundsätzlich nicht auf bestimmte Elektrodendurchmesser beschränkt, so daß alle bekannten Drahtelektroden (Durchmesser von 0,8 bis 1,6 mm) im erfindungsgemäßen Schweißverfahren einsetzbar sind. Hervorragend eignen sich Drahtelektroden mit einem Durchmesser von 1,0 und insbesondere mit dem bevorzugten Durchmesser von 1,2 mm.

Vorteile ergeben sich dadurch, daß als Drahtelektrode ein Massivdraht eingesetzt wird. Im Gegensatz dazu ermöglichen Fülldrähte mit Füllungen aus Schlacke (basische oder Rutil) und/oder Metallpulver nicht die gewünschte Rotation des Lichtbogens.

Außerdem hat sich anhand von Versuchen herausgestellt, daß sich Drahtelektroden mit einem Anteil von 0,3 bis 1,3 Gew.-% Si, vorzugsweise 0,7 bis 1,2 Gew.-% Si hervorragend eignen. Zusätzlich können im Draht Kohlenstoff (vorzugsweise 0,04 bis 0,14 C) und Mangan (vorzugsweise 0,8 bis 2,10 Gew.-% Mn) enthalten sein.

Schließlich kann sich auch eine auf der Oberfläche verkupferte Drahtelektrode für das erfindungsgemäße Verfahren positiv auswirken, da aufgrund der guten Leitfähigkeit des Kupfers einerseits der Spannungsabfall im Kontaktrohr verringert und andererseits der Stromübergang verbessert werden kann. Ferner dient die Verkupferung der Verbesserung der Gleitfähigkeit des Drahtes, was die Drahtzufuhr vor allem bei hohen Drahtvorschubgeschwindigkeiten spürbar erleichtert. Es hat sich gezeigt, daß eine gleichmäßige Verkupferung die Stabilität des Lichtbogens unterstützt.

Durch die Zumischung von Helium zum Schutzgas wird aufgrund seiner günstigen Wärmeleit- und Wärmeübergangseigenschaften ein breiterer Einbrand erzielt, indem die Flanken der Schweißnaht verstärkt aufgeschmolzen werden und bei einem kurzzeitigen Vorlaufen des Schmelzbades Flankenbindefehler vermieden werden. In Ausgestaltung des erfindungsgemäßen Verfahrens enthält das Schutzgas 15 bis 35 Vol.-% Helium, vorzugsweise 20 bis 30 Vol.-% Helium.

Drahtvorschubgeschwindigkeiten zwischen 15 und 30 m/min führen zu besonders guten Ergebnissen beim Schweißen unter den Bedingungen des erfindungsgemäßen Verfahrens. Besonders hochwertige Schweißergebnisse konnten in Versuchen hergestellt werden. Daher wird empfohlen, eine Drahtvorschubgeschwindigkeit zwischen 18 und 35 m/min, vorzugsweise zwischen 20 und 30 m/min, besonders bevorzugt zwischen 22 und 25 m/min, für eine Drahtelektrode mit einem Durchmesser von 1,2 mm und eine Drahtvorschubgeschwindigkeit zwischen 15 und 30 m/min, vorzugsweise zwischen 17 und 25 m/min, besonders bevorzugt zwischen 20 und 23 m/min, für eine Drahtelektrode mit einem Durchmesser von 1,0 mm einzustellen.

Erfindungsgemäß wird dem Schutzgas Sauerstoff beigemischt. Sauerstoff weist ein niedriges Ionisationspotential auf und verbessert so die Leitfähigkeit des Plasmas. Sauerstoff unterstützt die Tendenz des Lichtbogens zu rotieren. Durch die Zumischung von Sauerstoff in das Schutzgas gelingt es, den Bereich des Werkstoffübergangs durch einen stabil rotierenden Lichtbogen zu Lasten der Verfahren mit nicht-rotierendem Sprühlichtbogen auszudehnen. Ein hoher Sauerstoff-Gehalt fördert die Stabilität der Lichtbogenrotation. In Ausgestaltung der Erfindung wird daher vorgeschlagen, daß der Sauerstoffanteil des Schutzgases über 5 Vol.-%, vorzugsweise zwischen 5,5 und 8 Vol.-% beträgt.

## Patentansprüche

1. Verfahren zum Metallschutzgasschweißen mit einem zwischen einer abschmelzenden Drahtelektrode und einem metallischen Werkstück ausgebildeten rotierendem Lichtbogen unter Zufuhr eines im wesentlichen aus Argon oder aus Argon und Helium bestehenden Schutzgases, **dadurch gekennzeichnet, daß** eine Drahtelektrode aus einem ferromagnetischen Material eingesetzt wird und entweder ein Schutzgas mit 1 bis 8 Vol.-% O₂ und restlich Argon oder ein Schutzgas mit 1 bis 8 Vol.-% O₂, 10 bis 40 Vol.-% Helium und restlich Argon verwendet wird.

2. Verfahren zum Metallschutzgasschweißen nach Anspruch 1, **dadurch gekennzeichnet, daß** als Drahtelektrode ein Massivdraht eingesetzt wird.

3. Verfahren zum Metallschutzgasschweißen nach einem der Ansprüche 1 oder 2, **dadurch gekennzeichnet, daß** eine Drahtelektrode mit einem Anteil von 0,3 bis 1,3 Gew.-% Si, vorzugsweise 0,7 bis 1,2 Gew.-% Si verwendet wird.

4. Verfahren zum Metallschutzgasschweißen nach einem der Ansprüche 1 bis 3, **dadurch gekennzeichnet, daß** eine auf der Oberfläche verkupferte Drahtelektrode eingesetzt wird.

5. Verfahren zum Metallschutzgasschweißen nach einem der Ansprüche 1 bis 4, **dadurch gekennzeichnet, daß** das Schutzgas 15 bis 35 Vol.-% Helium, vorzugsweise 20 bis 30 Vol.-% Helium enthält.

6. Verfahren zum Metallschutzgasschweißen nach einem der Ansprüche 1 bis 5, **dadurch gekennzeichnet, daß** eine Drahtvorschubgeschwindigkeit zwischen 18 und 35 m/min, vorzugsweise zwischen 20 und 30 m/min, besonders bevorzugt zwischen 22 und 25 m/min, für eine Drahtelektrode mit einem Durchmesser von 1,2 mm eingestellt wird.

7. Verfahren zum Metallschutzgasschweißen nach einem der Ansprüche 1 bis 5, **dadurch gekennzeichnet, daß** eine Drahtvorschubgeschwindigkeit zwischen 15 und 30 m/min, vorzugsweise zwischen 17 und 25 m/min, besonders bevorzugt zwischen 20 und 23 m/min, für eine Drahtelektrode mit einem Durchmesser von 1,0 mm eingestellt wird.

8. Verfahren zum Metallschutzgasschweißen nach einem der Ansprüche 1 bis 7, **dadurch gekennzeichnet, daß** der Sauerstoffanteil des Schutzgases über 5 Vol.-%, vorzugsweise zwischen 5,5 und 8 Vol.-%, beträgt.

## Claims

1. Process for metal inert gas welding using a rotating arc which is formed between a melting wire electrode and a metallic workpiece, a shielding gas which substantially comprises argon or argon and helium being supplied, **characterized in that** a wire electrode made from a ferromagnetic material is used and either a shielding gas comprising 1 to 8% by volume of O₂, remainder argon or a shielding gas comprising 1 to 8% by volume of O₂, 10 to 40% by volume of helium, remainder argon is used.

2. Process for metal inert gas welding according to Claim 1, **characterized in that** the wire electrode used is a solid wire.

3. Process for metal inert gas welding according to either of Claims 1 or 2, **characterized in that** a wire electrode containing from 0.3 to 1.3% by weight of Si, preferably from 0.7 to 1.2% by weight of Si, is used.

4. Process for metal inert gas welding according to one of Claims 1 to 3, **characterized in that** a wire electrode which is copper-plated on the surface is used.

5. Process for metal inert gas welding according to one of Claims 1 to 4, **characterized in that** the shielding gas contains from 15 to 35% by volume of helium, preferably from 20 to 30% by volume of helium.

6. Process for metal inert gas welding according to one of Claims 1 to 5, **characterized in that** a wire feed speed of between 18 and 35 m/min, preferably between 20 and 30 m/min, particularly preferably between 22 and 25 m/min, is set for a wire electrode with a diameter of 1.2 mm.

7. Process for metal inert gas welding according to one of Claims 1 to 5, **characterized in that** a wire feed speed of between 15 and 30 m/min, preferably between 17 and 25 m/min, particularly preferably between 20 and 23 m/min, is set for a wire electrode with a diameter of 1.0 mm.

8. Process for metal inert gas welding according to one of Claims 1 to 7, **characterized in that** the oxygen content of the shielding gas is over 5% by volume, preferably is between 5.5 and 8% by volume.

## Revendications

1. Procédé de soudure de métaux sous gaz de protection à l'aide d'un arc électrique rotatif, formé entre un fil-électrode qui fond et une pièce métallique, sous apport d'un gaz de protection se composant pour l'essentiel d'argon ou d'argon et d'hélium, **caractérisé en ce que** l'on utilise un fil-électrode fait d'un matériau ferromagnétique et que l'on utilise soit un gaz de protection ayant de 1 à 8 % en volume de O₂, le reste étant de l'argon, soit un gaz de protection ayant de 1 à 8 % en volume de O₂, de 10 à 40 % en volume d'hélium, le reste étant de l'argon.

2. Procédé de soudure de métaux sous gaz de protection selon la revendication 1, **caractérisé en ce que** l'on utilise, en tant que fil-électrode, un fil massif.

3. Procédé de soudure de métaux sous gaz de protection selon l'une quelconque des revendications 1 ou 2, **caractérisé en ce que** l'on utilise un fil-électrode ayant une proportion de 0,3-1,3 % en poids de Si, de préférence de 0,7 à 1,2 % en poids de Si.

4. Procédé de soudure de métaux sous gaz de protection selon l'une quelconque des revendications 1 à 3, **caractérisé en ce que** l'on utilise un fil-électrode cuivré en surface.

5. Procédé de soudure de métaux sous gaz de protection selon l'une quelconque des revendications 1 à 4, **caractérisé en ce que** le gaz de protection contient de 15 à 35 % en volume d'hélium, de préférence de 20 à 30 % en volume d'hélium.

6. Procédé de soudure de métaux sous gaz de protection selon l'une quelconque des revendications 1 à 5, **caractérisé en ce que** l'on règle une vitesse d'avance de fil comprise entre 18 et 35 m/minute, de préférence entre 20 et 30 m/minute, tout particulièrement de préférence entre 22 et 25 m/minute, pour un fil-électrode ayant un diamètre de 1,2 mm.

7. Procédé de soudure de métaux sous gaz de protection selon l'une quelconque des revendications 1 à 5, **caractérisé en ce que** l'on règle une vitesse d'avance de fil comprise entre 15 et 30 m/minute, de préférence entre 17 et 25 m/minute, tout particulièrement de préférence entre 20 et 23 m/minute, pour un fil-électrode ayant un diamètre de 1,0 mm.

8. Procédé de soudure de métaux sous gaz de protection selon l'une quelconque des revendications 1 à 7, **caractérisé en ce que** la proportion d'oxygène du gaz de protection est plus de 5 % en volume, de préférence entre 5,5 et 8 % en volume.
